# EUROPEAN PATENT SPECIFICATION

(11) **EP 2 143 751 B1**
(45) Date of publication and mention of the grant of the patent: **16.11.2011**
(21) Application number: 09009036.6
(22) Date of filing: 10.07.2009
(51) Int. Cl.: C08G 64/16

(54) **Polycarbonate and method for producing the same**
Polycarbonat und Herstellungsverfahren dafür
Polycarbonate et son procédé de production

(30) Priority: 10.07.2008 JP 2008180041
(43) Date of publication of application: 13.01.2010
(73) Proprietor: Kabushiki Kaisha Toyota Chuo Kenkyusho, Aichi-Gun Aichi 480-1192 (JP)
(72) Inventor: Lee, Chi-Han, Aichi-gun Aichi 480-1192 (JP); Takagi, Hideki, Aichi-gun Aichi 480-1192 (JP); Katagiri, Yoshihide, Aichi-gun Aichi 480-1192 (JP); Kato, Makoto, Aichi-gun Aichi 480-1192 (JP)
(74) Representative: Kramer - Barske - Schmidtchen

(56) References cited:
- EP-A1- 1 640 400
- EP-A1- 2 108 671
- US-A1- 2005 143 554

## Description

### BACKGROUND OF THE INVENTION

### Field of the Invention

The present invention relates to a polycarbonate and a method for producing the same. More specifically, the present invention relates to: a polycarbonate comprising a repeating unit having an isosorbide structure or a derivative structure thereof; and a method for producing the same.

### Related Background Art

Polycarbonates are resins superior in transparency, heat resistance and impact resistance, and thus are widely used as the materials for electric and electronic components, automotive components, optical components, and the like. Conventionally, polycarbonates have been produced by reacting bisphenol A with phosgene or diphenyl carbonate. However, a polycarbonate produced by using a plant-derived raw material such as isosorbide is proposed from the viewpoint of reduction in environmental burdens.

For example, Shimokawa, et al. in Proceeding of 15tn Polymer Material Forum, the Society of Polymer Science, Japan, issued on November 1, 2006, p. 203 (Document 1) discloses a polycarbonate obtained by melt-polycondensing isosorbide and diphenyl carbonate, the polycarbonate having a glass transition temperature of 173°C. Moreover, Saber Chatti, et al. in Macromolecules, 2006, vol. 39, pp. 9064-9070 (Document 2) discloses: a polycarbonate obtained by solution-polymerizing isosorbide and phosgene, the polycarbonate having a glass transition temperature of 115.0°C to 163.5°C; and a polycarbonate obtained by solution-polymerizing isosorbide, isomannide and phosgene, the polycarbonate having a glass transition temperature of 163°C to 165°C. However, polycarbonates produced by using only isosorbide and a derivative thereof as diol have a rigid structure, resulting in a problem of having a considerably high melt viscosity and accordingly being difficult to mold.

International Publication No. 2004-111106 (Document 3) discloses a polycarbonate having an isosorbide-derived ether diol residue and an aliphatic diol residue. Japanese Unexamined Patent Application Publication No. 2006-28441 (Document 4) discloses an optical film formed from the polycarbonate. Such a polycarbonate having an aliphatic diol residue tends to be superior in moldability and have a flexible structure, but tends to have a low glass transition temperature. The polycarbonate described in Document 3 has a glass transition temperature of 90.4°C to 157.4°C, and a low elongation at break, and accordingly is not satisfactory in toughness yet.

Japanese Unexamined Patent Application Publication No. 2008-24919 (Document 5) discloses a polycarbonate copolymer having an isosorbide-derived structural unit and an alicyclic dihydroxy compound-derived structural unit. This polycarbonate copolymer has a high thermal decomposition temperature and is superior in toughness, but is not satisfactory because of its low glass transition temperature and low tensile yield elasticity.

Japanese Unexamined Patent Application Publication No. Sho 56-110723 (Document 6) discloses an isosorbide oligocarbonate having a bisphenol end group. However, the isosorbide oligocarbonate described in Document 6 has a low number average molecular weight of 654 to 7016. Therefore, in Document 6, the isosorbide oligocarbonate is reacted with other bisphenol and phosgene to obtain an isosorbide polycarbonate having a high molecular weight.

Saber Chatti, et al. in J. Polym. Sci. Part A: Polym. Chem., 2006, Vol. 44, pp. 3616-3628 (Document 7) discloses a copolycarbonate obtained by solution-polymerizing isosorbide, bisphenol or a derivative thereof, and phosgene. However, the copolycarbonate described in Document 7 contains 47 mol% to 50 mol% of an isosorbide-derived ether diol residue, thus is not preferable from the viewpoint of reduction in environmental burdens. A copolycarbonate obtained by reacting bisphenol A or dimethyl bisphenol A with isosorbide described in Document 7 has a glass transition temperature of 135°C to 143°C and thus is not yet satisfactory. On the other hand, a copolycarbonate obtained by reacting bisphenol C with isosorbide described in Document 7 has a glass transition temperature of 175°C, but is not satisfactory in molecular weight yet.

US 2005/0143554 A1 relates to a composition comprising a copolycarbonate, which copolycarbonate comprises structural units derived from an isosorbide, an aromatic dihydroxy compound of the formula HO-A-OH and C=O structural units derived from an activated diaryl carbonate of the formula Ar-O-(C=O)-O-Ar, wherein A is an aromatic radical and Ar is a substituted aromatic radical, as well as to a method for preparing the same.

EP 2 108 671 A1, which is prior art according to Art. 54(3) EPC, discloses a polycarbonate resin containing a recurring unit on the basis of isosorbide as the major constituent, wherein the glass transition temperature (Tg) of the resin is 150 to 200 °C and the 5 % weight loss temperature (Td) of the resin is 330 to 400 °C, as well as to a method for preparing the same.

### SUMMARY OF THE INVENTION

The present invention has been made in consideration of the problems in the conventional techniques. An object of the present invention is to provide a polycarbonate which has a high molecular weight, high storage elastic modulus, and superior heat resistance, and which exhibits rigidity and toughness at high levels in good balance.

The present inventors have earnestly studied in order to achieve the above object. As a result, the present inventors have revealed that an isosorbide polycarbonate can be imparted with toughness and heat resistance without significant reduction in the glass transition temperature and rigidity by randomly polymerizing an isosorbide compound in combination with a bisphenol compound as diols at predetermined ratios. Thus, the present invention is completed.

Specifically, the polycarbonate of the present invention comprises:
a repeating unit represented by the following formula (1) : 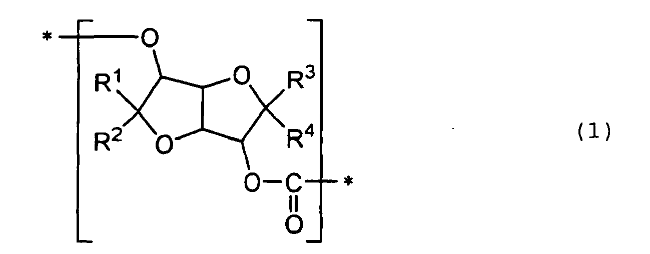 (wherein R¹ to R⁴ each independently represent any one of a hydrogen atom, an alkyl group, a cycloalkyl group, an alkenyl group, and an aryl group; "R¹ and R²" and/or "R³ and R⁴" may be bonded to each other to form a ring; and * represents a bonding site to an adjacent repeating unit); and
a repeating unit represented by the following formula (2) : 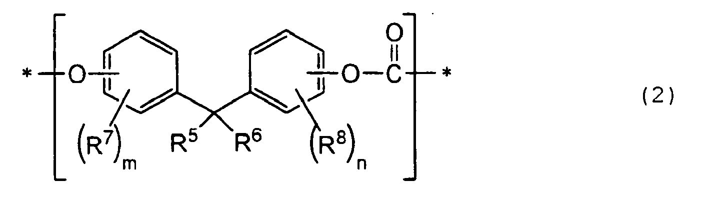 (wherein R⁵ and R⁶ each independently represent any one of a hydrogen atom, an alkyl group, a cycloalkyl group, an alkenyl group, and an aryl group, and may be bonded to each other to form a ring; R⁷ and R⁸ each independently represent any one of an alkyl group, an alkenyl group, and an aryl group; m and n each independently represent an integer of 0 to 4; and * represents a bonding site to an adjacent repeating unit), wherein
the repeating units are placed at random,
   relative to 100 mol% of all the repeating units, a content of the repeating unit represented by the formula (1) is 55 mol% to 98 mol% inclusive, and a content of the repeating unit represented by the formula (2) is 2 mol% to 45 mol% inclusive,
   the polycarbonate has a glass transition temperature of 160 °C or higher, and the number average molecular weight equivalent to standard polystyrene measured by gel permeation chromatography is 20000 or higher. Moreover, of such polycarbonates, one having a thermal decomposition temperature of 300°C or higher is more preferable.

Additionally, a method for producing a polycarbonate of the present invention comprises a step of melting and randomly polymerizing:
in presence of a nitrogen-containing cyclic compound having a melting point of 140°C or lower,
at least one kind of isosorbide compound selected from the group consisting of isosorbide and derivatives thereof represented by the following formula (3): 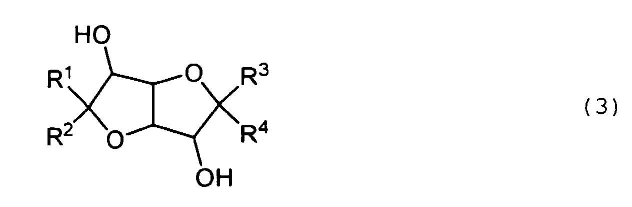 (wherein R¹ to R⁴ each independently represent any one of a hydrogen atom, an alkyl group, a cycloalkyl group, an alkenyl group, and an aryl group; and "R¹ and R²" and/or "R³ and R⁴" may be bonded to each other to form a ring);
at least one kind of bisphenol compound selected from the group consisting of bisphenols and derivatives thereof represented by the following formula (4): 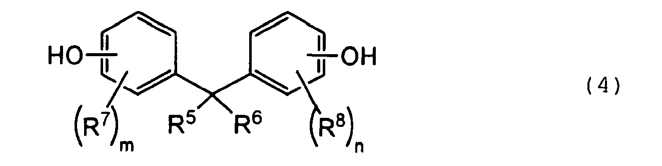 (wherein R⁵ and R⁶ each independently represent any one of a hydrogen atom, an alkyl group, a cycloalkyl group, an alkenyl group, and an aryl group; R⁵ and R⁶ may be bonded to each other to form a ring; R⁷ and R⁸ each independently represent any one of an alkyl group, an alkenyl group, and an aryl group: and m and n each independently represent an integer of 0 to 4); and a carbonate diester, wherein
   relative to 100 mol% of all the diols, a ratio of the isosorbide compound is 55 mol% to 98 mol% inclusive, and a ratio of the bisphenol compound is 2 mol% to 45 mol% inclusive.

In the method for producing a polycarbonate of the present invention, the carbonate diester is preferably a carbonate diester represented by the following formula (5): 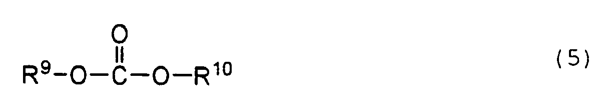 (wherein R⁹ and R¹⁰ each independently represent any one of an alkyl group and an aryl group).

A reason why the method for producing a polycarbonate of the present invention enables the isosorbide polycarbonate to have toughness and heat resistance without significant reduction in the glass transition temperature and rigidity is not exactly known. However, the present inventors speculate as follows. Specifically, in the production method of the present invention, the isosorbide compound and the bisphenol compound are randomly copolymerized at predetermined ratios. Accordingly, in the obtained polycarbonate, the repeating unit represented by the formula (1) and the repeating unit represented by the formula (2) are placed at random at the predetermined ratios. It is speculated that the polycarbonate of the present invention consequently exhibits toughness due to the bisphenol structure or the derivative structure thereof and rigidity due to the isosorbide structure or the derivative structure thereof at high levels in good balance. Furthermore, it is speculated that the bisphenol structure inhibits an oxidation reaction, thereby increasing the thermal decomposition temperature, resulting in improved heat resistance. Note that the thermal decomposition temperature in the present invention refers to a temperature at which the mass is reduced by 5% by mass in thermal analysis.

On the other hand, when only the isosorbide compound as diol is used, it is speculated that the obtained polycarbonate has a rigid structure, and thereby is superior in rigidity but inferior in toughness. Moreover, in this case, since the obtained polycarbonate does not have a bisphenol structure, it is speculated that oxidation reaction cannot be inhibited, and thereby the thermal decomposition temperature is decreased.

Meanwhile, it is speculated that an excessively large proportion of the bisphenol structure in a polycarbonate causes the polycarbonate to have an excessively large proportion of flexible structure, resulting in improved toughness but reduced rigidity.

Furthermore, it is speculated that, when isosorbide oligocarbonate having a bisphenol end group is reacted with another bisphenol and phosgene, an obtained polycarbonate is a block polycarbonate including a segment composed of repeating units having an isosorbide structure and a segment composed of repeating units having a bisphenol structure. It is speculated that toughness due to the bisphenol structure is not consequently imparted sufficiently.

The present invention makes it possible to provide a polycarbonate which has a high molecular weight, high storage elastic modulus and superior heat resistance, and which exhibits rigidity and toughness at high levels in good balance.

### BRIEF DESCRIPTION OF THE DRAWINGS

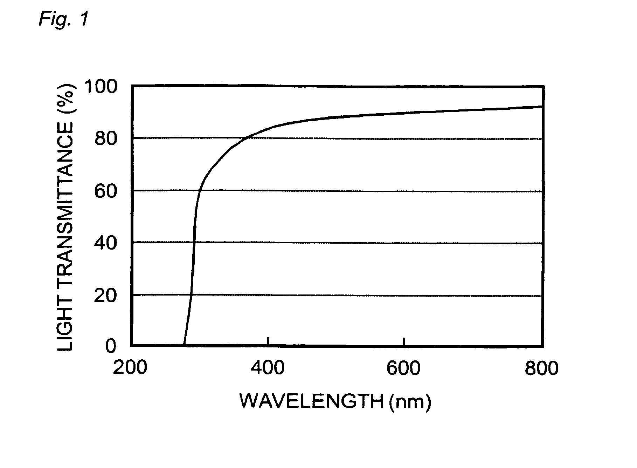

Fig. 1 is a graph showing the light transmittance of a polycarbonate film.

### DETAILED DESCRIPTION OF THE PREFERRED EMBODIMENTS

The present invention will be described below in detail in line with preferred embodiments thereof.

First, a polycarbonate of the present invention will be described. The polycarbonate of the present invention comprises:
a repeating unit represented by the following formula (1) : 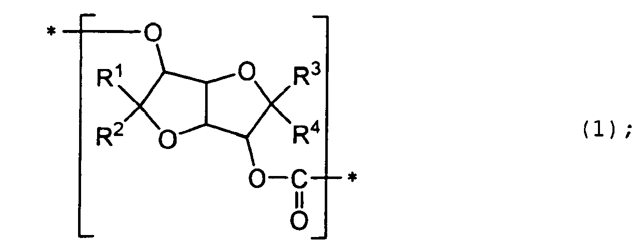 and
a repeating unit represented by the following formula (2): 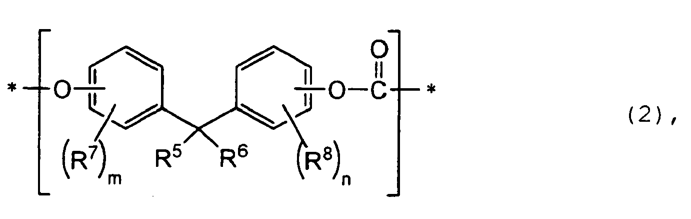 wherein the repeating units are placed at random at particular ratios. Note that, in the formulas (1) and (2), * represents a bonding site to an adjacent repeating unit.

In the repeating unit represented by the formula (1), R¹ to R⁴ each independently represent any one of a hydrogen atom, an alkyl group, a cycloalkyl group, an alkenyl group, and an aryl group. The alkyl group generally has 1 to 18 carbon atoms, preferably 1 to 6 carbon atoms. The cycloalkyl group generally has 3 to 8 carbon atoms, preferably 3 to 6 carbon atoms. The alkenyl group generally has 2 to 12 carbon atoms, preferably 2 to 6 carbon atoms. The aryl group generally has 6 to 18 carbon atoms, preferably 6 to 12 carbon atoms.

Of such repeating units, preferred from the viewpoints of superior rigid structure and superior rigidity is a repeating unit represented by the following formula (1a):

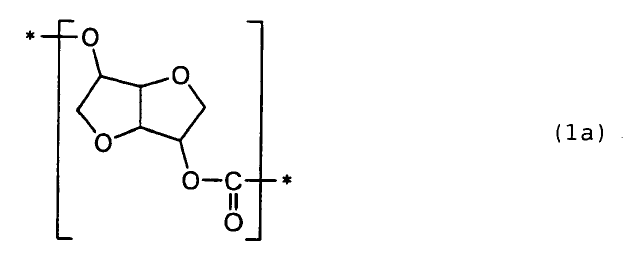

This repeating unit is formed by reacting isosorbide or a derivative thereof with a carbonate diester, which are described below. Note that * in the formula (1a) is the same as * in the formula (1).

In the formula (1), "R¹ and R²" and/or "R³ and R⁴" may be bonded to each other to form a ring. Examples of such a ring include a cycloalkyl group and a cycloalkenyl group. The cycloalkyl group and the cycloalkenyl group generally have 3 to 12 carbon atoms, preferably 3 to 6 carbon atoms.

In the polycarbonate of the present invention, the content of the repeating unit represented by the formula (1) is 55 mol% to 98 mol% inclusive relative to 100 mol% of all the repeating units. If the content of the repeating unit represented by the formula (1) is less than the lower limit, the glass transition temperature and the storage elastic modulus tend to be reduced, and the rigidity tends to excessively be reduced. Meanwhile, if the content exceeds the upper limit, there are tendencies that the thermal decomposition temperature of the polycarbonate is not increased, not improving the heat resistance, and also that toughness is not sufficiently provided to the polycarbonate. Furthermore, from such viewpoints, the content of the repeating unit represented by the formula (1) is preferably 70 mol% to 98 mol% inclusive, more preferably 80 mol% to 98 mol% inclusive.

In the repeating unit represented by the formula (2), R⁵ and R⁶ each independently represent any one of a hydrogen atom, an alkyl group, a cycloalkyl group, an alkenyl group, and an aryl group. The alkyl group generally has 1 to 18 carbon atoms, preferably 1 to 6 carbon atoms. The cycloalkyl group generally has 3 to 8 carbon atoms, preferably 3 to 6 carbon atoms. The alkenyl group generally has 2 to 12 carbon atoms, preferably 2 to 6 carbon atoms. The aryl group generally has 6 to 18 carbon atoms, preferably 6 to 12 carbon atoms.

In the formula (2), R⁵ and R⁶ may be bonded to each other to form a ring. Examples of such a ring include a cycloalkyl group and a cycloalkenyl group. Such the cycloalkyl group and the cycloalkenyl group generally have 3 to 12 carbon atoms, preferably 3 to 6 carbon atoms.

In the formula (2) , R⁷and R⁸ each independently represent any one of an alkyl group, an alkenyl group, and an aryl group. The alkyl group generally has 1 to 18 carbon atoms, preferably 1 to 12 carbon atoms. The alkenyl group generally has 2 to 12 carbon atoms, preferably 2 to 6 carbon atoms. The aryl group generally has 6 to 18 carbon atoms, preferably 6 to 12 carbon atoms.

In the formula (2), m and n each independently represent an integer of 0 to 4, preferably an integer of 0 to 2.

Of such repeating units, preferred from the viewpoints of increasing the thermal decomposition temperature and improving the heat resistance are repeating units represented by the following formulas (2a) and (2b):

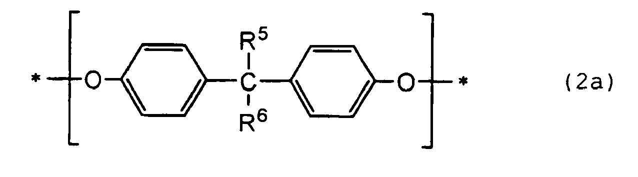

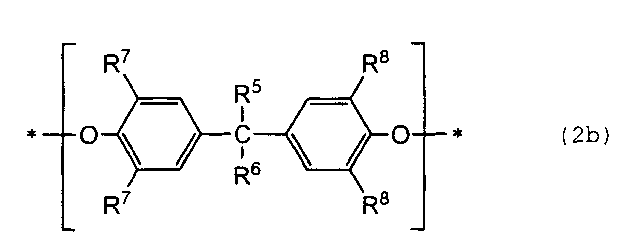

The repeating units are formed by reacting a bisphenol or a derivative thereof with a carbonate diester, which are described below. Note that R⁵ to R⁸ and * in the formulas (2a) and (2b) are the same as R⁵ to R⁸ and * in the formula (2).

In the polycarbonate of the present invention, the content of the repeating unit represented by the formula (2) is 2 mol% to 45 mol% inclusive relative to 100 mol% of all the repeating units. If the content of the repeating unit represented by the formula (2) is less than the lower limit, there are tendencies that the thermal decomposition temperature is not increased, not improving the heat resistance, and also that the toughness is not sufficiently provided to the polycarbonate. Meanwhile, if the content exceeds the upper limit, the glass transition temperature and the storage elastic modulus tend to be reduced, and the toughness tends to excessively be reduced. Furthermore, from such viewpoints, the content of the repeating unit represented by the formula (2) is preferably 2 mol% to 30 mol% inclusive, more preferably 2 mol% to 20 mol% inclusive.

In the polycarbonate of the present invention, the repeating unit represented by the formula (1) and the repeating unit represented by the formula (2) are placed at random in the polymer chain. For this reason, toughness due to the bisphenol structure or the derivative structure thereof and rigidity due to the isosorbide structure or the derivative structure thereof are exhibited at high levels in good balance.

Such a polycarbonate has a glass transition temperature of 160°C or higher. Here, the upper limit of the glass transition temperature is not particularly limited, but is preferably 170°C or lower. The polycarbonate of the present invention has superior heat resistance, and the thermal decomposition temperature is preferably, for example, 300°C or higher, more preferably 305°C or higher. Furthermore, the number average molecular weight equivalent to standard polystyrene measured by gel permeation chromatography is 20000 or higher, preferably 25000 or higher.

The polycarbonate of the present invention preferably has: a storage elastic modulus at 25°C of 2.5 GPa or higher; a tensile yield stress of 70MPa or greater; a tensile elasticity of 2.0 GPa or higher; a tensile yield elongation of 10% or more; a tensile elongation at break of 10% or more; and a light transmittance at a wavelength of 500 nm of 75% or more.

Next, a method for producing a polycarbonate of the present invention will be described. The polycarbonate of the present invention can be produced by melting and randomly polymerizing:
in presence of a nitrogen-containing cyclic compound having a melting point of 140°C or lower,
at least one kind of isosorbide compound selected from the group consisting of isosorbide and derivatives thereof represented by the following formula (3): 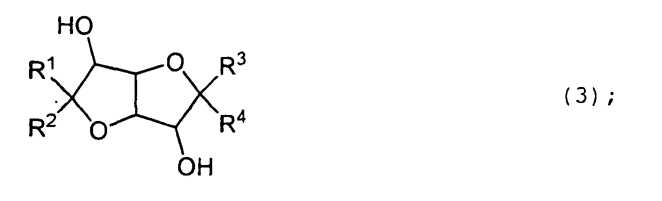
at least one kind of bisphenol compound selected from the group consisting of bisphenols and derivatives thereof represented by the following formula (4): 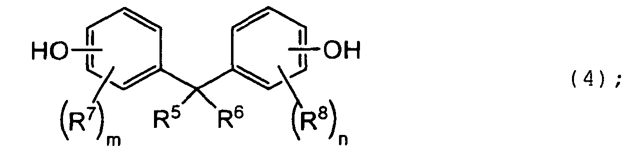 and
a carbonate diester.

In the isosorbide compound represented by the formula (3), R¹ to R⁴ are the same as R¹ to R⁴ in the formula (1). As such an isosorbide compound, an isosorbide compound in which R¹ to R⁴ in the formula (1) are all hydrogen atoms is preferred. The examples include 1,4:3,6-dianhydro-D-sorbitol [isosorbide], 1,4:3,6-dianhydro-D-mannitol [isomannide], and 1,4:3,6-dianhydro-L-sorbitol [isoidide].

In the method for producing a polycarbonate of the present invention, the ratio of the isosorbide compound is 55 mol% to 98 mol% inclusive relative to 100 mol% of all the diols. If the ratio of the isosorbide compound is less than the lower limit, the glass transition temperature and storage elastic modulus of the obtained polycarbonate to tend to be reduced, and the rigidity to tend to excessively be reduced. Meanwhile, if the ratio exceeds the upper limit, there are tendencies that the thermal decomposition temperature of the polycarbonate is not increased, not improving the heat resistance, and also that toughness is not sufficiently provided to the polycarbonate. Furthermore, from such viewpoints, the ratio of the isosorbide compound is preferably 70 mol% to 98 mol% inclusive, more preferably 80 mol% to 98 mol% inclusive.

In the bisphenol compound represented by the formula (4), R⁵ to R⁸, m and n are the same as R⁵ to R⁸, m and n in the formula (2). Of such bisphenol compounds, preferred from the viewpoints of increasing the thermal decomposition temperature and improving the heat resistance are bisphenols and derivatives thereof represented by the following formulas (4a) and (4b): 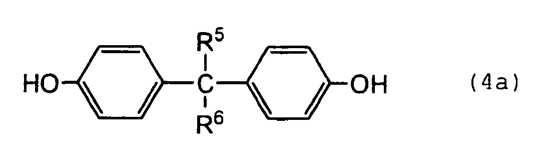 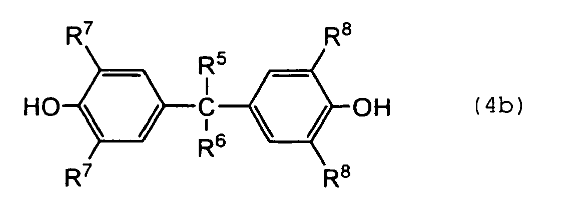 (where R⁵ to R⁸ are the same as R⁵ to R⁸ in the formula (2)). More preferred are 2,2-bis(4-hydroxyphenyl)propane [bisphenol A], 2,2-bis(3,5-dimethyl-4-hydroxyphenyl)propane, bis(4-hydroxyphenyl)methane [bisphenol F],
1,1-bis(4-hydroxyphenyl)cyclohexane [bisphenol C], and 1,1-bis(4-hydroxyphenyl)ethane [bisphenol AD].

In the method for producing a polycarbonate of the present invention, the ratio of the bisphenol compound is 2 molt to 45 mol% inclusive relative to 100 mol% of all the diols. If the ratio of the bisphenol compound is less than the lower limit, there are tendencies that the thermal decomposition temperature of the polycarbonate is not increased, not improving the heat resistance, and also that toughness is not sufficiently provided to the polycarbonate. Meanwhile, if the ratio exceeds the upper limit, the glass transition temperature and the storage elastic modulus to tend to be reduced, and the rigidity to tend to excessively be reduced. Furthermore, from such viewpoints, the ratio of the bisphenol compound is preferably 2 mol% to 30 mol% inclusive, more preferably 2 mol% to 20 mol% inclusive.

As the carbonate diester used in the present invention, carbonate diesters represented by the following formula (5): 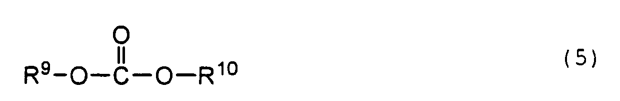 (where R⁹ and R¹⁰ each independently represent an alkyl group or an aryl group) are preferred. The alkyl group generally has 1 to 12 carbon atoms, preferably 2 to 4 carbon atoms. The aryl group generally has 6 to 18 carbon atoms, preferably 6 to 12 carbon atoms. Of such carbonate diesters, preferred from the viewpoint of the reactivity with the isosorbide compound and the bisphenol compound are dialkyl carbonates having alkyl group with 2 to 4 carbon atoms and diphenyl carbonate. Diphenyl carbonate is more preferred.

In the method for producing a polycarbonate of the present invention, the ratio of the carbonate diester is preferably 1 mol to 2 mol, more preferably 1 mol to 1.5 mol, relative to 1 mol of all the diols. If the ratio of the carbonate diester is less than the lower limit, unreacted diol tends to be remained. Meanwhile, if the ratio exceeds the upper limit, unreacted carbonate diester tends to be remained. Both cases are not economically preferable.

In the method for producing a polycarbonate of the present invention, the isosorbide compound, the bisphenol, and the carbonate diester are melted and randomly polymerized. Such random polymerization allows sufficiently improved toughness to be provided to the polycarbonate without reduction in the rigidity of polycarbonate. Moreover, the melt-polymerization eliminates a need to recover the solvent and makes it possible to obtain a resin synthesized in a melted state. Consequently, the resin can directly be pelletized and allowed to have a high molecular weight. On the other hand, solution-polymerization necessitates a solvent recovery process and a cleaning process to remove an inorganic salt, and tends to have a long polymerization time.

The polymerization reaction is carried out in the presence of a nitrogen-containing cyclic compound having a melting point of 140°C or lower (preferably 125°C or lower). The nitrogen-containing cyclic compound acts as a catalyst in the polymerization reaction. Examples of such a nitrogen-containing compound includes
4-dimethylaminopyridine (melting point: 108°C to 110°C), 1,2,4-triazole (melting point: 119°C to 121°C), imidazole (melting point: 88°C to 91°C), 2-dimethylaminopyridine (liquid at normal temperature), 1, 2, 3-triazole (melting point: 23°C to 25°C), pyrrole (liquid at normal temperature), pyrimidine (liquid at normal temperature), pyrazine (melting point: 53°C), pyridazine (melting point: 87°C), tetrazole (liquid at normal temperature), 2-picoline (liquid at normal temperature), 3-picoline (liquid at normal temperature), 4-picoline (liquid at normal temperature), and piperidine (liquid at normal temperature). Use as a catalyst of such a nitrogen-containing cyclic compound having a melting point within that range makes it possible to obtain polycarbonate having a high molecular weight and superior transparency (for example, one having the foregoing number average molecular weight and the above-mentioned light transmittance).

Meanwhile, use as a catalyst of nitrogen-containing cyclic compounds having a melting point over the upper limit or a tin compound (for example, n-BuSn(=O)OH) deteriorates polymerization efficiency, and there is a tendency that a polycarbonate having a high molecular weight cannot be obtained. When a tin compound is used as a catalyst, a polycarbonate tends to be colored, deteriorating the transparency.

In the method for producing a polycarbonate of the present invention, the ratio (mass ratio) of the nitrogen-containing cyclic compound is preferably 50 ppm to 1000 ppm, more preferably 100 ppm to 600 ppm, relative to all the diols. If the ratio of the nitrogen-containing cyclic compound is less than the lower limit, the polymerization reaction tends not to sufficiently proceed. Meanwhile, if the ratio exceeds the upper limit, a resin synthesized tends to be colored, and there is a tendency that a polycarbonate having a high molecular weight is difficult to produce.

In the method for producing a polycarbonate of the present invention, the polymerization reaction temperature is preferably 200°C to 250°C. If the polymerization reaction temperature is lower than the lower limit, there is a tendency that a polycarbonate having a high molecular weight is difficult to produce. Meanwhile, if the polymerization reaction temperature exceeds the upper limit, the deterioration of a polycarbonate tends to occur, and there is a tendency that a transparent polycarbonate is difficult to produce. When the raw material is heated to the polymerization reaction temperature, preferably, the temperature in the reaction container is increased gradually. Rapid increase in the temperature in the reaction container causes the distribution of the molecular weight of the obtained polycarbonate to be widened, and a polycarbonate having a low molecular weight tends to be produced easily.

The polymerization reaction time is preferably 2 hours to 6 hours. If the polymerization reaction time is shorter than the lower limit, a polycarbonate having a low molecular weight tends to be produced easily. Meanwhile, if the polymerization reaction time exceeds the upper limit, the distribution of the molecular weight of the obtained polycarbonate is widened, and the polycarbonate tends to be deteriorated.

### [Examples]

The present invention will more specifically be described below based on Examples and Comparative Examples. However, the present invention is not limited to Examples below. Note that the molecular weight, glass transition temperature, thermal decomposition temperature, and storage elastic modulus of polycarbonates obtained in Examples and Comparative Examples were measured by the following methods.

### <Molecular weight>

The number average molecular weight (Mn), weight average molecular weight (Mw), and molecular weight distribution (Mw/Mn) of the polycarbonates were measured under the following conditions by using gel permeation chromatography ("Shodex GPC-101" available from SHOWATSUSHO CO., LTD.).
Column: "K-805L" available from Showa Denko K.K.
Solvent: Chloroform
Flow rate: 1.0 ml/minute
Standard reference material: Standard polystyrene

### <Glass transition temperature>

Approximately 5.0 mg of a polycarbonate was weighed. The glass transition temperature of the polycarbonate was measured under conditions of a temperature range of 25°C to 250°C and a temperature increase rate of 10°C/minute by using a differential scanning calorimeter ("DSC Q1000" available from TA Instruments).

### <Thermal decomposition temperature>

Approximately 7. 0 mg of a polycarbonate was weighed. The thermal decomposition temperature of the polycarbonate was measured under conditions of a temperature range of 25°C to 500°C and a temperature increase rate of 10°C/minute by using a thermal analyzer ("Thermoplus TG8120" available from Rigaku Corporation). A temperature at which the mass of the polycarbonate was reduced by 5% by mass was designated as a thermal decomposition temperature.

### <Storage elastic modulus>

A polycarbonate was melted at 250°C and press-molded in a thickness of approximately 0.5 mm. Thereafter, a test piece of approximately 5.0 mm x approximately 30 mm x approximately 0.5 mm was cut off. The size of the test piece was accurately measured, and then the storage elastic modulus of the polycarbonate was measured under conditions of a frequency of 10 Hz, a temperature range of -100°C to 250°C and a temperature increase rate of 4°C/minute by using a viscoelasticity spectrometer (available from IT Instrument Control Co., Ltd.).

### (Example 1)

1.75 g (12.0 mmol) of isosorbide (available from Sigma-Aldrich Corporation), 0.685 g (3.0 mmol) of bisphenol A (available from Wako Pure Chemical Industries Ltd.) and 3.26 g (15.2 mmol) of diphenyl carbonate (available from TOKYO CHEMICAL INDUSTRY CO., LTD.) were put in a glass container equipped with a decompressor and a stirrer. Then, 1.2 mg of 4-dimethylaminopyridine (melting point: 108°C to 110°C; hereinafter, abbreviated as "DMAP") was added as a catalyst to the mixture.

The temperature inside the glass container was increased to 120°C by using an oil bath while nitrogen gas was fed in the glass container at a rate of 20 ml/minute and the mixture was stirred. Then, the temperature was maintained for 5 minutes. Thereafter, the temperature inside the glass container was increased to 160°C, and then the temperature was maintained for 5 minutes. When the temperature inside the glass container was further increased to 180°C, phenol was generated. The content of the glass container was depressurized to 0.1 Torr to distill off the phenol, and this condition was continued for 30 minutes. Then, the temperature inside the glass container was increased to 200°C, and the feed of nitrogen gas was stopped. Subsequently, the glass container was maintained for 20 minutes. Thereafter, the temperature inside the glass container was gradually increased to 230°C. Then, melt-polymerization was carried out while the temperature was maintained between 230°C and 240°C for 5 hours. Thus, a polycarbonate was synthesized. After completion of the reaction, the content of the glass container was cooled to room temperature.

Then, the obtained crude polycarbonate was dissolved in chloroform, and this solution was added to methanol to precipitate the polycarbonate. The dissolution and precipitation processes were repeated twice in total to refine the polycarbonate. The refined polycarbonate was dried at 110°C for 12 hours in vacuo. Thereby, a polycarbonate containing 80 mol% of isosorbide structure-containing repeating units was obtained.

Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 2)

A polycarbonate containing 80 mol% of isosorbide structure-containing repeating units was synthesized in the same method as in Example 1 except that 1.0 mg of 1, 2, 4-triazole (melting point: 119°C to 121°C) was used as a catalyst in place of DMAP. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 3)

A polycarbonate containing 80 mol% of isosorbide structure-containing repeating units was synthesized in the same method as in Example 1 except that 1.0 mg of imidazole (melting point: 88°C to 91°C) was used as a catalyst in place of DMAP. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 4)

A polycarbonate containing 89 mol% of isosorbide structure-containing repeating units was synthesized in the same method as in Example 1 except that the amounts of isosorbide, bisphenol A, and diphenyl carbonate were changed to 2.34 g (16. 0 mmol), 0.457 g (2.0 mmol) and 3.90 g (18.2 mmol), respectively. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 5)

A polycarbonate containing 89 mol% of isosorbide structure-containing repeating units was synthesized in the same method as in Example 4 except that 1.0 mg of 1,2, 4-triazole (melting point: 119°C to121°C) was used as a catalyst in place of DMAP. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 6)

A polycarbonate containing 89 mol% of isosorbide structure-containing repeating units was synthesized in the same method as in Example 4 except that 1.0 mg of imidazole (melting point: 88°C to 91°C) was used as a catalyst in place of DMAP. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 7)

A polycarbonate containing 55 mol% of isosorbide structure-containing repeating units was synthesized in the same method as in Example 1 except that the amounts of isosorbide, bisphenol A, and diphenyl carbonate were changed to 1.754 g (12.0 mmol), 2.245 g (9.836 mmol) and 4.734 g (22.1 mmol), respectively. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 8)

A polycarbonate containing 91 mol% of isosorbide structure-containing repeating units was synthesized in the same method as in Example 1 except that the amounts of isosorbide, bisphenol A, and diphenyl carbonate were changed to 2.19 g (15.0 mmol), 0.342 g (1.5 mmol) and 3.58 g (16.7 mmol), respectively. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 9)

A polycarbonate containing 95 mol% of isosorbide structure-containing repeating units was synthesized in the same method as in Example 2 except that the amounts of isosorbide, bisphenol A, and diphenyl carbonate were changed to 2.92 g (20. 0 mmol), 0.228 g (1.0 mmol) and 4.54 g (21.2 mmol), respectively. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Example 10)

A polycarbonate containing 98 mol% of isosorbide structure-containing repeating units was synthesized in the same method as in Example 1 except that the amounts of isosorbide, bisphenol A, and diphenyl carbonate were changed to 3.654 g (25.0 mmol), 0.114 g (0.5 mmol) and 5.51 g (25.7 mmol), respectively. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Comparative Example 1)

A polycarbonate containing 50 mol% of isosorbide structure-containing repeating units was synthesized in the same method as in Example 2 except that the amounts of isosorbide, bisphenol A, and diphenyl carbonate were changed to 1.17g (8.0 mmol), 1.83 g (8.0 mmol) and 3.47 g (16.2 mmol), respectively. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Comparative Example 2)

A polycarbonate containing 100 mol% of isosorbide structure-containing repeating units was synthesized in the same method as in Example 1 except that bisphenol A was not used, and that the amounts of isosorbide and diphenyl carbonate were changed to 2.19 g (15.0 mmol), 3.25 g (15.2 mmol), respectively. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods.

### (Comparative Example 3)

A polycarbonate containing 100 mol% of isosorbide structure-containing repeating units was synthesized in the same method as in Comparative Example 2 except that 1.0 mg of 1,2,4-triazole (melting point: 119°C to 121°C) was used as a catalyst in place of DMAP. Table 1 shows the number average molecular weight (Mn), weight average molecular weight (Mw), molecular weight distribution (Mw/Mn), glass transition temperature (Tg), thermal decomposition temperature (Td) and storage elastic modulus at 25°C of the polycarbonate, which were measured according to the above-described methods

**[Table 1]**

| | Catalyst. | Content of reparting units (mol%) | | Molecular weight | | | Tg (°C) | Td (°C) | Storage elastic modulus (GPa, 25°C) |
|---|---|---|---|---|---|---|---|---|---|
| | | Isosorhide structure content | Bisphenol A structure content | Mn | Mw | Mw/Mn | | | |
| Ex. 1 | DMAP | 80 | 20 | 30,078 | 93,650 | 2.5 | 163 | 322 | 2.9 |
| Ex 2 | 1, 2, 4-triazole | 80 | 20 | 36,493 | 78,351 | 2.1 | 165 | 330 | 3.0 |
| Ex. 3 | Imidazole | 80 | 20 | 35,098 | 82,355 | 2.3 | 166 | 331 | 2.8 |
| Ex. 4 | DMAP | 89 | 11 | 37,176 | 104,059 | 2.8 | 167 | 313 | 3.3 |
| Ex. 5 | 1, 2, 4-triazole | 89 | 11 | 38,968 | 85,571 | 2.2 | 168 | 320 | 3.2 |
| Ex. 6 | Imidazole | 89 | 11 | 39,615 | 84,345 | 2.1 | 170 | 321 | 3.4 |
| Ex. 7 | DMAP | 55 | 45 | 37,025 | 78,660 | 2.1 | 160 | 340 | 2.7 |
| Ex. 8 | DMAP | 91 | 9 | 45,194 | 116,580 | 2.6 | 167 | 323 | 3.4 |
| Ex. 9 | 1, 2, 4-triazole | 95 | 5 | 35,447 | 70,808 | 2.0 | 170 | 319 | 3.5 |
| Ex. 10 | DMAP | 98 | 2 | 63,162 | 148,334 | 2.3 | 169 | 300 | 3.5 |
| Comp. Ex. 1 | 1, 2, 4-triazole | 50 | 50 | 37,414 | 101,305 | 2.7 | 155 | 348 | 2.3 |
| Comp. Ex. 2 | DMAP | 100 | 0 | 67,480 | 133.693 | 2.0 | 162 | 286 | 3.5 |
| Comp. Ex. 3 | 1, 2, 4-triazole | 100 | 0 | 69,098 | 174.783 | 2.5 | 166 | 286 | 2.9 |

It was verified that, as apparent from the results shown in Table 1, the polycarbonates of the present invention each containing 55 mol% to 98 mol% inclusive of the isosorbide structure-containing repeating units (Examples 1 to 10), which was synthesized by using the nitrogen-containing cyclic compound having a melting point of 140°C or lower as the catalyst, had a high molecular weight, a high glass transition temperature and a high thermal decomposition temperature.

On the other hand, the polycarbonate containing 50 mol% of the isosorbide structure-containing repeating units (Comparative Example 1) had a similar molecular weight, but had a lower glass transition temperature and a lower storage elastic modulus, compared with the polycarbonates of the present invention synthesized by using the same catalyst (Examples 2, 5 and 9). The polycarbonates each containing 100 mol% of the isosorbide structure-containing repeating units (Comparative examples 2 and 3) had a higher molecular weight, but had a lower thermal decomposition temperature by at least 10°C than the polycarbonates of the present invention synthesized by using the same catalysts (Examples 1, 4, 7, 8 and 10 and Examples 2, 5 and 9).

### (Example 11)

The polycarbonate containing 80 mol% of the isosorbide structure-containing repeating units synthesized in Example 1 was melted at 250°C and press-molded. Then, a test piece of 10 mm x 100 mm x 0.5 mm was formed therefrom. This test piece was mounted in a universal testing machine available from Instron Corporation, and was subjected to a tensile test at a tensile speed of 5 mm/minute at a temperature of 23±1°C at a humidity of 40% to 60% RH according to the method described in JIS K7113 to measure a tensile yield stress, a tensile elasticity, a tensile yield elongation and a tensile elongation at break. Table 2 shows the results.

### (Example 12)

A test piece was formed in the same manner as in Example 11 except that the polycarbonate containing 89 mol% of the isosorbide structure-containing repeating units synthesized in Example 4 was used as a polycarbonate. Then, the test piece was subjected to the tensile test. Table 2 shows the results.

### (Example 13)

A test piece was formed in the same manner as in Example 11 except that the polycarbonate containing 55 mol% of the isosorbide structure-containing repeating units synthesized in Example 7 was used as a polycarbonate. Then, the test piece was subjected to the tensile test. Table 2 shows the results.

### (Example 14)

A test piece was formed in the same manner as in Example 11 except that the polycarbonate containing 91 mol% of the isosorbide structure-containing repeating units synthesized in Example 8 was used as a polycarbonate. Then, the test piece was subjected to the tensile test. Table 2 shows the results.

### (Example 15)

A test piece was formed in the same manner as in Example 11 except that the polycarbonate containing 95 mol% of the isosorbide structure-containing repeating units synthesized in Example 9 was used as a polycarbonate. Then, the test piece was subjected to the tensile test. Table 2 shows the results.

### (Example 16)

A test piece was formed in the same manner as in Example 11 except that the polycarbonate containing 98 mol% of the isosorbide structure-containing repeating units synthesized in Example 10 was used as a polycarbonate. Then, the test piece was subjected to the tensile test. Table 2 shows the results.

### (Comparative Example 4)

A test piece was formed in the same manner as in Example 11 except that the polycarbonate containing 50 mol% of the isosorbide structure-containing repeating units synthesized in Comparative Example 1 was used as a polycarbonate. Then, the test piece was subjected to the tensile test. Table 2 shows the results.

### (Comparative Example 5)

A test piece was formed in the same manner as in Example 11 except that the polycarbonate containing 100 mol% of the isosorbide structure-containing repeating units synthesized in Comparative Example 3 was used as a polycarbonate. Then, the test piece was subjected to the tensile test. Table 2 shows the results.

**[Table 2]**

| | Catalyst | Content of repeating units (mol%) | | Tensile yield stress (MPa) | Tensile elasticity (GPa) | Tensile yield elongation (%) | Tensile elongation at break (%) |
|---|---|---|---|---|---|---|---|
| | | Isosorbide structure content | Bisphenol A structure content | | | | |
| Ex.11 | DMAP | 80 | 20 | 74 | 2.1 | 12.6 | 12.9 |
| Ex.12 | DMAP | 89 | 11 | 82 | 2.1 | 1.3.8 | 14.8 |
| Ex13 | DMAP | 55 | 45 | 64 | 1.9 | 11.4 | 11.5 |
| Ex.14 | DMAP | 91 | 9 | 81 | 2.1 | 13.4 | 14.2 |
| Ex.15 | 1,2,4-triazole | 95 | 5 | 92 | 2.4 | 14.4 | 17.4 |
| Ex.16 | DMAP | 98 | 2 | 80 | 2.4 | 13.7 | 14.7 |
| Comp.Ex.4 | 1,2,4 triazole | 50 | 50 | 61 | 1.7 | 11.1 | 12.2 |
| Comp.Ex.5 | 1,2,4-triazole | 100 | 0 | 84 | 2.6 | 7.2 | 7.3 |

It was verified that, as apparent from the results shown in Table 2, the polycarbonate of the present invention each containing 55 mol% to 98 mol% inclusive of the isosorbide structure-containing repeating units were superior in tensile yield stress, tensile elasticity, tensile yield elongation and tensile elongation at break, and thus exhibited the rigidity and toughness at high levels in good balance. In particular, it was verified that the polycarbonates each containing 80 mol% to 98 mol% inclusive of the isosorbide structure-containing repeating units (Examples 11, 12, and 14 to 16) were superior in both rigidity and toughness. On the other hand, the polycarbonate containing 50 mol% of the isosorbide structure-containing repeating units (Comparative Example 4) had a low tensile yield stress and a low tensile elasticity, was inferior in rigidity, and had a low tensile yield elongation. The polycarbonate containing 100 mol% of the isosorbide structure-containing repeating units (Comparative Example 5) had a low tensile yield elongation and a low tensile elongation at break, and was inferior in toughness.

### (Example 17)

The polycarbonate synthesized by using DMAP as the catalyst in Example 1 was melted at 250°C and press-molded. Then, a film having a thickness of 0.005 mm was formed. The light transmittance of the film at wavelengths of 250 nm to 800 nm was measured using a spectrophotometer ("UV-3600" available from Shimadzu Corporation). Fig. 1 shows the result.

It was verified that, as apparent from the result shown in Fig. 1, the polycarbonate of the present invention synthesized by using DMAP as the catalyst (Example 17) had superior transparency. For example, the light transmittance at a wavelength of 500nm was 88%.

As has been described above, the present invent.ion makes it possible to obtain a polycarbonate which has a high molecular weight, high storage elastic modulus and superior heat resistance, and which exhibits rigidity and toughness at high levels in good balance.

Therefore, having a high glass transition temperature and a superior heat resistance and exhibiting rigidity and toughness at high levels in good balance, the polycarbonate of the present invention is useful, for example, as the materials for electric and electronic components used in electric products typified by a television, VTR, DVD, and mobile phone and for automobile components such as a lamp, lens, and bumper. Moreover, when the polycarbonate of the present invention is synthesized by using a nitrogen-containing cyclic compound having a melting point of 140°C or lower, the polycarbonate is superior in transparency, and thus useful as the material for optical components such as a CD and optical fiber.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A polycarbonate comprising:
a repeating unit represented by the following formula (1) : 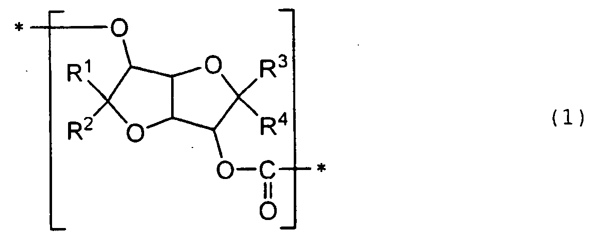 (wherein R¹ to R⁴ each independently represent any one of a hydrogen atom, an alkyl group, a cycloalkyl group, an alkenyl group, and an aryl group; "R¹ and R²" and/or "R³ and R⁴" may be bonded to each other to form a ring; and * represents a bonding site to an adjacent repeating unit); and
a repeating unit represented by the following formula (2) : 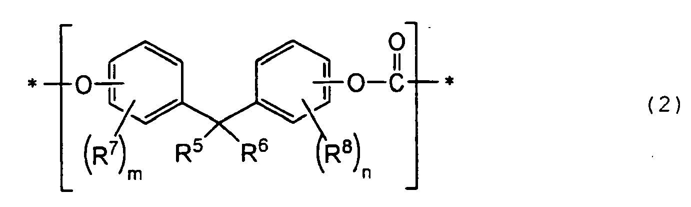 (wherein R⁵ and R⁶ each independently represent any one of a hydrogen atom, an alkyl group, a cycloalkyl group, an alkenyl group, and an aryl group, and may be bonded to each other to form a ring; R⁷ and R⁸ each independently represent any one of an alkyl group, an alkenyl group, and an aryl group; m and n each independently represent an integer of 0 to 4; and * represents a bonding site to an adjacent repeating unit), wherein
the repeating units are placed at random,
relative to 100 mol% of all the repeating units, a content of the repeating unit represented by the formula (1) is 55 mol% to 98 mol% inclusive, and a content of the repeating unit represented by the formula (2) is 2 mol% to 45 mol% inclusive,
the polycarbonate has a glass transition temperature of 160°C or higher, and
the number average molecular weight equivalent to standard polystyrene measured by gel permeation chromatography is 20000 or higher.

2. The polycarbonate according to claim 1, wherein a thermal decomposition temperature is 300°C or higher.

3. A method for producing a polycarbonate comprising a step of melting and randomly polymerizing:
in presence of a nitrogen-containing cyclic compound having a melting point of 140°C or lower
at least one kind of isosorbide compound selected from the group consisting of isosorbide and derivatives thereof represented by the following formula (3): 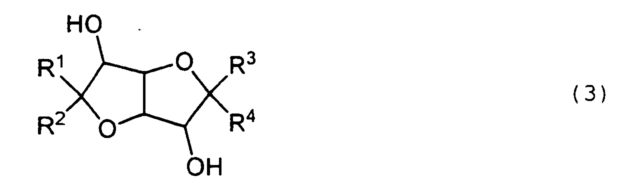 (wherein R¹ to R⁴ each independently represent any one of a hydrogen atom, an alkyl group, a cycloalkyl group, an alkenyl group, and an aryl group; and "R¹ and R²" and/or "R³ and R⁴" may be bonded to each other to form a ring);
at least one kind of bisphenol compound selected from the group consisting of bisphenols and derivatives thereof represented by the following formula (4): 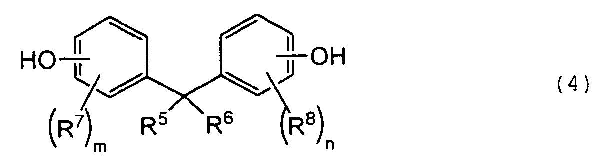 (wherein R⁵ and R⁶ each independently represent any one of a hydrogen atom, an alkyl group, a cycloalkyl group, an alkenyl group, and an aryl group; R⁵ and R⁶ may be bonded to each other to form a ring; R⁷ and R⁸ each independently represent any one of an alkyl group, an alkenyl group, and an aryl group; and m and n each independently represent an integer of 0 to 4); and
a carbonate diester, wherein
relative to 100 mol% of all the diols, a ratio of the isosorbide compound is 55 mol% to 98 mol% inclusive, and a ratio of the bisphenol compound is 2 mol% to 45 mol% inclusive.

4. The method for producing a polycarbonate according to claim 3, wherein the carbonate diester is represented by the following formula (5): 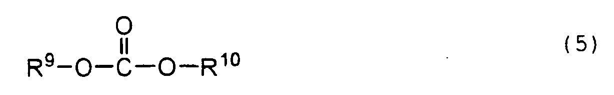 (wherein R⁹ and R¹⁰ each independently represent any one of an alkyl group and an aryl group).

## Patentansprüche

1. Polycarbonat, umfassend:
eine Wiederholungseinheit, die durch die folgende Formel (1) dargestellt ist: 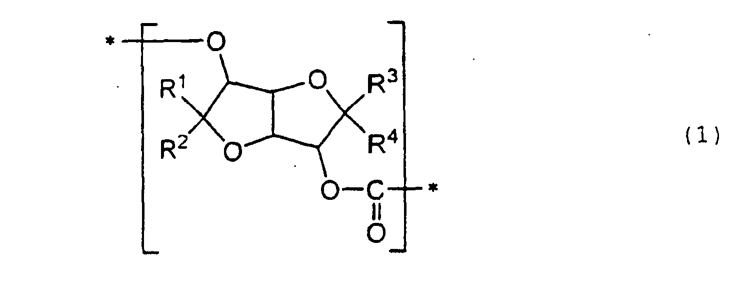 (worin R¹ bis R⁴ jeweils unabhängig eine(s) von einem Wasserstoffatom, einer Alkylgruppe, einer Cycloalkylgruppe, einer Alkenylgruppe und einer Arylgruppe darstellen, "R¹ und R²" und/oder "R³ und R⁴" unter Bildung eines Rings aneinander gebunden sein können und * eine Bindungsstelle zu einer benachbarten Wiederholungseinheit darstellt), und
eine Wiederholungseinheit, die durch die folgende Formel (2) dargestellt ist: 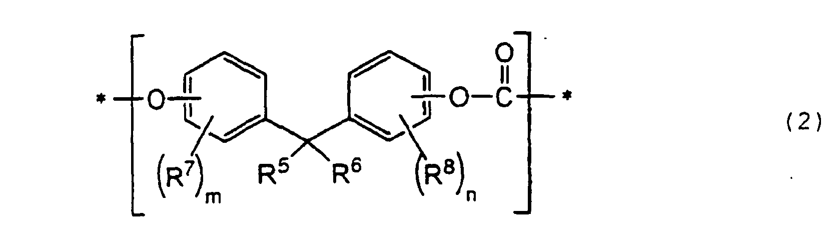 (worin R⁵ und R⁶ jeweils unabhängig eine(s) von einem Wasserstoffatom, einer Alkylgruppe, einer Cycloalkylgruppe, einer Alkenylgruppe und einer Arylgruppe darstellen und unter Bildung eines Rings aneinander gebunden sein können, R⁷ und R⁸ jeweils unabhängig eine von einer Alkylgruppe, einer Alkenylgruppe und einer Arylgruppe darstellen, m und n jeweils unabhängig eine ganze Zahl von 0 bis 4 darstellen, und * eine Bindungsstelle zu einer benachbarten Wiederholungseinheit darstellt), wobei
die Wiederholungseinheiten statistisch angeordnet sind,
bezogen auf 100 mol-% aller Wiederholungseinheiten, der Gehalt der Wiederholungseinheit, die durch die Formel (1) dargestellt ist, 55 mol-% bis einschließlich 98 mol-% beträgt, und der Gehalt der Wiederholungseinheit, die durch die Formel (2) dargestellt ist, 2 mol-% bis einschließlich 45 mol-% beträgt,
das Polycarbonat eine Glasübergangstemperatur von 160 °C oder höher aufweist,
und
das Zahlenmittel des Molekulargewichts äquivalent zu einem Polystyrolstandard und gemessen mittels Gelpermeationschromatographie 20000 oder mehr beträgt.

2. Polycarbonat nach Anspruch 1, bei dem die thermische Zersetzungstemperatur 300 °C oder mehr beträgt.

3. Verfahren zur Herstellung eines Polycarbonats, umfassend einen Schritt des Schmelzens und des statistischen Polymerisierens:
in der Gegenwart einer Stickstoff-enthaltenden cyclischen Verbindung mit einem Schmelzpunkt von 140 °C oder weniger,
mindestens einer Art von lsosorbidverbindung, ausgewählt aus der Gruppe, bestehend aus Isosorbid und Derivaten davon, dargestellt durch die folgende Formel (3): 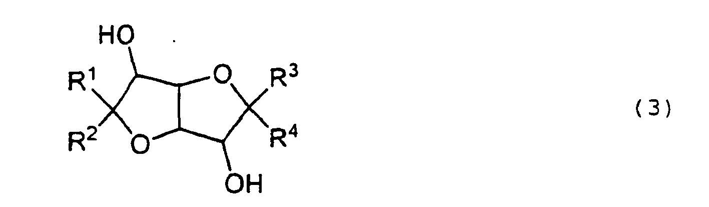 (worin R¹ bis R⁴ jeweils unabhängig eine(s) von einem Wasserstoffatom, einer Alkylgruppe, einer Cycloalkylgruppe, einer Alkenylgruppe und einer Arylgruppe darstellen, und "R¹ und R²" und/oder "R³ und R⁴" unter Bildung eines Rings aneinander gebunden sein können),
mindestens einer Art von Bisphenolverbindung, ausgewählt aus der Gruppe, bestehend aus Bisphenolen und Derivaten davon, dargestellt durch die folgende Formel (4): 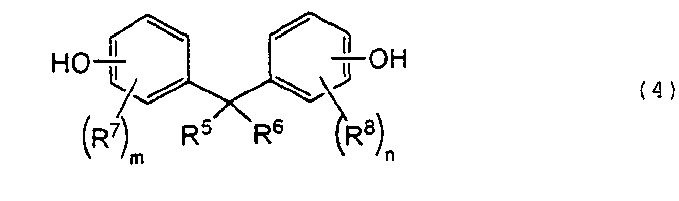 (worin R⁵ und R⁶ jeweils unabhängig eine(s) von einem Wasserstoffatom, einer Alkylgruppe, einer Cycloalkylgruppe, einer Alkenylgruppe und einer Arylgruppe darstellen, R⁵ und R⁶ unter Bildung eines Rings aneinander gebunden sein können, R⁷ und R⁸ jeweils unabhängig eine von einer Alkylgruppe, einer Alkenylgruppe und einer Arylgruppe darstellen und m und n jeweils unabhängig eine ganze Zahl von 0 bis 4 darstellen), und
eines Carbonatdiesters, wobei
bezogen auf 100 mol-% aller Diole, der Anteil der Isosorbidverbindung 55 mol-% bis einschließlich 98 mol-% beträgt, und der Anteil der Bisphenolverbindung 2 mol-% bis einschließlich 45 mol-% beträgt.

4. Verfahren zur Herstellung eines Polycarbonats nach Anspruch 3, bei dem der Carbonatdiester durch die folgende Formel (5) dargestellt ist: 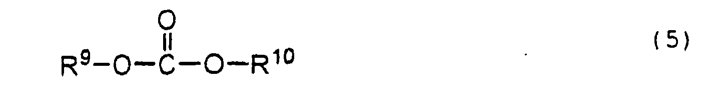 (worin R⁹ und R¹⁰ jeweils unabhängig eine von einer Alkylgruppe und einer Arylgruppe darstellen).

## Revendications

1. Polycarbonate comprenant :
une unité récurrente représentée par la formule (1)
suivante : 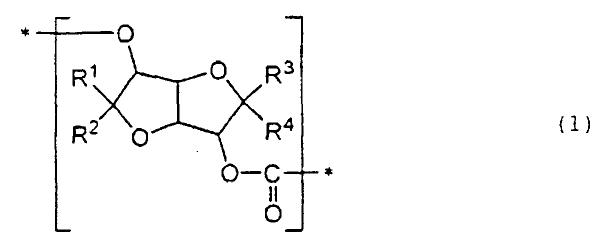 (dans laquelle les radicaux R¹ à R⁴ représentent chacun
indépendamment et de manière quelconque un atome d'hydrogène, un groupement alkyle, une groupement cycloalkyle, un groupement alcényle et un groupement aryle ; les radicaux "R¹ et R²" et/ou "R³ et R⁴" peuvent être liés l'un à l'autre pour former un cycle ; et le signe * représente un site de liaison à une unité récurrente adjacente) ; et une unité récurrente représentée par la formule (2) suivante : 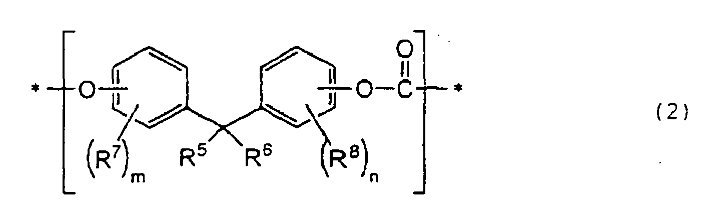
(dans laquelle les radicaux R⁵ et R⁶ représentent
indépendamment et de manière quelconque un atome d'hydrogène, un groupement alkyle, une groupement cycloalkyle, un groupement alcényle et un groupement aryle, et peuvent être liés l'un à l'autre pour former un cycle ; les radicaux R⁷ et R⁸ représentent chacun indépendamment et de manière quelconque un groupement alkyle, un groupement alcényle et un groupement aryle ; m et n représentent chacun indépendamment un nombre entier de 0 à 4 ; et le signe * représente un site de liaison à une unité récurrente adjacente), dans lequel
les unités récurrentes sont placées de manière
aléatoire,
sur la base de 100 % en mole de toutes les unités
récurrentes, une teneur de l'unité récurrente représentée par la formule (1) est de 55 % en mole à 98 % en mole, valeurs comprises, et une teneur de l'unité récurrente représentée par la formule (2) est égale à 2 % en mole à 45 % en mole, valeurs comprises,
le polycarbonate présente une température de
transition vitreuse de 160 °C ou plus, et
le poids moléculaire moyen en nombre équivalent à un
polystyrène de référence, mesuré par chromatographie par perméation de gel, est de 20 000 ou plus.

2. Polycarbonate selon la revendication 1, dans lequel une température de décomposition thermique est de 300 °C ou plus.

3. Procédé pour produire un polycarbonate comprenant une étape consistant à faire fondre et à polymériser de manière aléatoire :
en présence d'un composé cyclique contenant de l'azote
et présentant un point de fusion de 140 °C ou moins,
au moins un type de composé d'isosorbure sélectionné
dans le groupe constitué de l'isosorbure, et de ses dérivés, représenté par la formule (3) suivante : 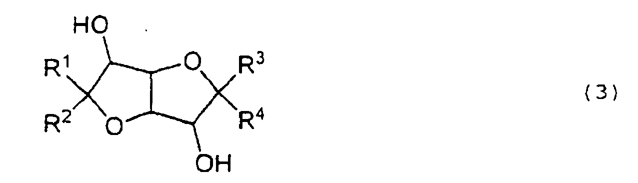
(dans laquelle les radicaux R¹ à R⁴ représentent chacun
indépendamment et de manière quelconque un atome d'hydrogène, un groupement alkyle, une groupement cycloalkyle, un groupement alcényle et un groupement aryle ; et les radicaux "R¹ et R²" et/ou "R³ et R⁴" peuvent être liés l'un à l'autre pour former un cycle) ;
au moins un type de composé de bisphénol sélectionné
dans le groupe constitué de bisphénols, et de leurs dérivés, représenté par la formule (4) suivante : 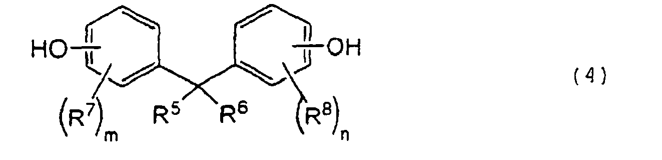
(dans laquelle les radicaux R⁵ et R⁶ représentent
indépendamment et de manière quelconque un atome d'hydrogène, un groupement alkyle, une groupement cycloalkyle, un groupement alcényle et un groupement aryle ; les radicaux R⁵ et R⁶ peuvent être liés l'un à l'autre pour former un cycle ;
les radicaux R⁷ et R⁸ représentent chacun indépendamment et de manière quelconque un groupement alkyle, un groupement alcényle et un groupement aryle ; et m et n représentent chacun indépendamment un nombre entier de 0 à 4) ; et
un diester de carbonate, dans lequel
sur la base de 100 % en mole de tous les diols, un
rapport du composé d'isosorbure est de 55 % en mole à 98 % en mole, valeurs comprises, et un rapport du composé de bisphénol est de 2 % en mole à 45 % en mole, valeurs comprises.

4. Procédé pour produire un polycarbonate selon la revendication 3, dans lequel le diester de carbonate est représenté par la formule (5) suivante : 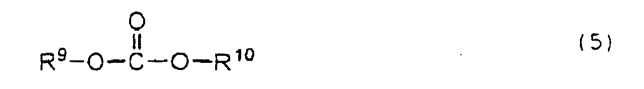 (dans laquelle les radicaux R⁹ et R¹⁰ représentent
chacun indépendamment et de manière quelconque un groupement alkyle et un groupement aryle).
